# EUROPEAN PATENT APPLICATION

(11) **EP 4 012 631 A1**
(43) Date of publication of application: **15.06.2022**
(21) Application number: 20213540.6
(22) Date of filing: 11.12.2020
(51) Int. Cl.: G06Q 10/04, G06Q 50/06

(54) **A METHOD FOR EVALUATING AN ELECTRICAL POWER MANAGEMENT OF TECHNICAL UNITS**

(71) Applicant: ABB Schweiz AG, 5400 Baden (CH)
(72) Inventor: PRIMAS, Bernhard, 68165 Mannheim (DE); BISKOPING, Matthias, 69493 Hirschberg (DE); GUTERMUTH, Georg, 69115 Heidelberg (DE); LENDERS, Felix, 64293 Darmstadt (DE)
(74) Representative: Maiwald Patent- und Rechtsanwaltsgesellschaft mbH

(57) **Abstract**

A method for evaluating an electrical power management of a multitude of technical units is described, including:
coupling a multitude of non-invasive metering devices electrically with the respective multitude of technical units;
measuring electrical data of the multitude of technical devices with the respective non-invasive metering devices based on at least one operating scenario of the multitude of technical devices;
transmitting the electrical data of each of the multitude of technical units to an analysing device based on a wireless technology;
determining an optimised operation scenario of the multitude of technical devices in respect to electrical power management based on the measured electrical data of the multitude of technical units and based on individual boundary conditions of the technical units, for evaluating the electrical power management of the multitude of technical units.

## Description

### Background

For assessing an electrical energy management of a corporation site, a comprehensive analysis requires time-series of data with sufficiently short time intervals, e.g., series of data with a sampling time of at most 15 minutes. Data of interest typically include the energy consumption, cost, and other characteristics of individual technical units. For the operation case, this data is provided through various means, such as live data measured in real time, historical data or forecasted data. However, in other cases, as for instance a consulting process, such data are typically not available.

### Description

Thus, gathering the required data may become a challenge, because if a separate process is set up in order to provide access to the data, such a process is time-consuming, because the data may be incomplete or not in the desired format and/or no documentation for the data is available causing another challenge for analysing them correctly.
Series of data with limited granularity may need an interpolation using a suitable model and a usability can be limited if the granularity of the original data is too sparse. A limitation in respect to covered time span of the series of data have to be overcome by extrapolation with assumptions, which may not be valid, because of, for instance, seasonal trends, e.g., in respect to different production quantities during the week and on weekends, or during winter and summer time, resulting in invalid assumptions. Provided series of data of an owner of the technical units may not include aspects of interest like peak consumption of electrical power or switching of operation of machines resulting in further questionable assumptions. Substitute data from similar sites may be used or key characteristics of the site are used as a base for assessing energy management of the site, which can result in a reduced significance of the considerations, conclusions or recommendations.

Aspects of the present invention are related to a method for evaluating an electrical power management of a multitude of technical units, an analysing device, a computer program and a computer readable storage medium with subject matter as described in the independent claims.
Advantageous modifications of the invention are stated in the dependent claims. All combinations of at least two of the features disclosed in the description, the claims and the figures fall within the scope of the invention. In order to avoid repetition, features disclosed in accordance with the method shall also apply and be claimable in accordance with mentioned systems.
In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly.
Some features are provided with counting words to improve readability or to make the assignment more clear, but this does not imply the presence of certain features.

To achieve these and other advantages and in accordance with the purpose of the invention, as embodied and broadly described herein, there is provided a method for evaluating an electrical power management of a multitude of technical units, including the following steps: In a step a multitude of non-invasive metering devices is electrically coupled with the respective multitude of technical units. In a further step electrical data of the multitude of technical devices are measured with the respective non-invasive metering devices based on at least one operating scenario of the multitude of technical devices. In a further step the electrical data of each of the multitude of technical units are transmitted to an analysing device based on a wireless technology. In a further step an optimised operation scenario of the multitude of technical devices is determined in respect to electrical power management base on the measured electrical data of the multitude of technical units and based on individual boundary conditions of the technical units, for evaluating the electrical power management of the multitude of technical units.

A multitude of technical units can comprise a small number of technical units, e.g. two or three technical units, the multitude can also comprise e.g. 100 technical units or a much higher number of technical units.

The non-invasive metering device can be a metering device configured to be electrically coupled to the technical unit without interrupting a power supply to the technical unit and/or without interrupting operation of the technical unit for temporary electrical measurement purpose of each of the multitude of technical units. Alternatively or additionally, a non-invasive metering device can be a metering device, which is inductively and/or capacitively electrically coupled to the respective technical unit. Alternatively or additionally, a non-invasive metering device can be a metering device coupled using a Rogowski coil to the respective technical unit.
Alternatively or additionally the non-invasive metering device can be quick-and-easy to install even for non-technicians.
A metering device based on an electrical sensor including a Rogowski coil can be a non-invasive metering device with low-cost to measure alternating electrical current or electrical high-speed current pulses.
There are metering devices and low cost power meters with snap-on current probes available at the market, which can be used to measure the actual usage of technical units of a cooperate sites and report back the collected data to computerized systems for further analysis and management purposes.
Such a non-invasive metering device can be selected by balancing data quality and cost of such a device and the method for evaluating can be performed successfully even using metering devices with a reduced data quality, at least to get a first idea on the optimisation potential. In case there is no voltage provided by the used non-invasive metering device, the voltage can be set to a constant value, e.g., 230V in Europe, to estimate the power as well as a power factor of the technical unit taking into account can be set to a constant value - in order to obtain the real power instead of a measured apparent power.

The non-invasive metering device can be configured to determine an electrical voltage and/or an electrical current and/or an electrical phase angle between the electrical voltage and the electrical current of the technical unit.

Electrical data measured by the non-invasive metering devices can comprise any electrical data and series of electrical data, where the individual electrical data is assigned to a timestamp.

An operation scenario can be a power on scenario of a heat ventilation air conditioning system (HVAC-system) and/or standard operation scenario and/or a power generator start scenario and/or a local power storing scenario.
An optimised operation scenario can store electrical power of the power grid using an electrical storage unit if the electrical power provided by the power grid is associated with small economic costs and taken from the electrical storage unit if there is a respective demand and the economic cost of the electric power provided by the power grid is high.

Using the method for evaluating the electrical power management of the multitude of technical units provide an easy-to-implement and low-cost method that enable users, which are not necessarily technicians, to collect data in an ad-hoc-manner and evaluate them for the required purpose.
The technical unit to be coupled to the non-invasive metering device can be selected by their power consumption and/or by their volatile or unknown power profile and/or by their unknown power peak consumption and/or generation depending on an operation scenario and/or by generally missing information.

The at least one operating scenario can be an operation scenario of interest, e.g., a power on scenario of a heat ventilation air conditioning system (HVAC) and to measure the electrical data corresponding to a power consumption response resulting from the change.

Advantageously the method for evaluation can be used for an ad-hoc demonstration of the analysis device, e.g., for demonstrating an optimisation potential of the electrical power management of a corporate site.

The measured electrical data of the multitude of technical devices can be used to identify occurrences of anomalous patterns in the measured data, as they might indicate savings potentials, asset issues, potential threads, or other facts of interest. Using this method for evaluating the electrical power management of the multitude of technical units can be performed by a supplier instead of an operator of a customer. For consulting purpose the installation of the metering devices can be non-invasive, easy to couple to the technical units and time-limited, in contrast to measurement needed for billing purposes a precision requirement to the measurement devices is much lower, for instance with a tolerance of ±10% of the electrical reading compared to measurements relevant for operations or billing. It even can be sufficient to measure relative measurements instead of absolute values.
By transmitting the electrical data based on a wireless technology the data can be sent in real-time, e.g., using WiFi and/or 5G-standards, for further processing and the data are not collected and do not have to be stored locally at the customer site.
If the evaluation using the method reveals a relative constant power factor, which is different from one, installing a specific reactive compensation can be recommended right away.
Evaluating the electrical power management using the method with measured electrical data on specific known operating scenario increases a reliability of the evaluation of the electrical power management, because determining the optimised operation scenario is based on reliable conditions.
The measured electrical data can pinpoint to additional optimization potential otherwise not found. Providing the method for evaluation to a customer can increase the quality of a consulting process without additional support from the customer including collecting of measured electrical data with sufficient granularity.
Using other words, determining an optimised operation scenario can include specific rules and/or boundary conditions for receiving and providing electrical power to technical units including rules and/or boundary conditions for distribution of electrical power between sources of electrical power and power consuming technical units taking into account further demand of electrical power.

According to an aspect a method for evaluating an electrical power management of a multitude of technical units is provided, including the following consecutive steps: In a first step a multitude of non-invasive metering devices is electrically coupled with the respective multitude of technical units. In a second step electrical data of the multitude of technical devices are measured with the respective non-invasive metering devices based on at least one operating scenario of the multitude of technical devices. In a third step the electrical data of each of the multitude of technical units are transmitted to an analysing device based on a wireless technology. In a fourth step an optimised operation scenario of the multitude of technical devices is determined in respect to electrical power management base on the measured electrical data of the multitude of technical units and based on individual boundary conditions of the technical units, for evaluating the electrical power management of the multitude of technical units.

According to an aspect the measured electrical data are pre-processed for enabling the determination of the optimised operation scenario of the multitude of technical units, particularly in respect to timely synchronisation of the measured electrical data of the multitude of technical units and/or fitting electrical measurement units of the measurements and/or fitting of data formats of the measurements.

According to an aspect the measured electrical data are pre-processed for enabling the determination of the optimised operation scenario of the multitude of technical units including a determination of a minimum and/or a maximum value of the data within a specified time-period and/or a calculation of an average value of the data and/or a calculation of a standard deviation of the data within the specified time period and/or calculating a mean value of the data for a specified time interval and/or calculating a mean value of the data for each 15 minute time interval synchronised with a 15 minute interval of the spot market of electrical power.

According to an aspect the wireless technology includes a technology based on WiFi-standards and/or 5G-standards.

According to an aspect the technical unit comprises a flexible load and/or a shiftable load and/or a fixed load and the determination of the optimised operation scenario is based on shifting a power consumption in time of the shiftable load and/or based on adaptation of a power supply of the flexible load.
A flexible load can be represented by a technical unit, which is configured to consume and/or to provide a different amount of electrical power, depending on external conditions, as for instance a battery energy storage system (BESS) and/or an electrical vehicle charging unit. Additionally or alternatively a flexible load can be represented by a technical unit, which can be operated and/or is configured to be operated within a specific time interval and still fulfilling its task, as for instance a battery unit and/or a power generation unit and/or a solar panel unit. An example for a shiftable load can be heating system. A fixed load can be represented by a technical unit, which is configured to consume and/or or to provide electrical power according to a fixed demand.

Examples for boundary conditions and rules for an optimisation of an operation scenario goal are listed:
- A power consumption of a technical unit for electrical vehicle charging can be treated as a flexible load.
- A battery energy storage system can be charged if the state of charge is below a threshold, e.g. of 50% and/or if there is excess electrical power generated by a solar panel unit and/or if the purchase price for electrical power is below the average price. The battery energy storing system can be discharged if the state of charge is above a threshold of, e.g. 50% and/or the purchase price at the power grid is above average and/or if the total demand reduced by the power supplied via solar generation exceeds either the physical power limit of the power grid or the purchase trade limit.
- A combined heat and power generation unit and/or a heat generation combined with a electrical co-generation is turned on, if there is a heat load demand that cannot be fulfilled from a heat-storage unit. Electrical co-generation can be used if a demand for electrical power is large enough and/or a co-generation of electrical power is cheaper than separate heat generation and purchasing of electrical power from the power grid.
- Conventional power generation is activated, if the total demand reduced by the power supplied via solar generation and battery supplied power exceeds either the physical power limit of the power grid or a purchase trade limit. In the latter case, an additional check can be performed if it is cheaper to violate the trade limit or to generate power and if it is cheaper to generate power using the conventional generator, conventional generation is used.
- All generated solar power can be used up to the amount that can be consumed. If there is excess generation, solar power can be either used to charge the battery or can be sold to the power grid. If no sales to power grid or battery charging is possible, solar power can be curtailed.

According to an aspect the technical unit comprises an electrical vehicle charging unit and/or a battery energy storing system and/or a combined heat and power unit and/or an electrical power generator and/or a solar powered generation unit and/or a capacitor bank and/or an arbitrary electrical load.

If by analysing the measured electrical data of the multitude of technical devices a power factor of a technical device is determined as relative constant and different from one, a specific reactive compensation can be suggested to a customer of such a technical unit. Such a reactive compensation can be provided by a capacitor bank.

According to an aspect the determination of the optimised operation scenario of the multitude of technical devices in respect to electrical power management is additionally based on an overall boundary condition for operating the multitude of technical units.

According to an aspect the determination of the optimised operation scenario of the multitude of technical devices in respect to electrical power management is based on an estimated future demand of electrical power and/or estimated future provision of electrical power for at least one individual technical unit of the multitude of technical units. An estimated future demand can result from a scheduled power up circle of technical units, which can result in the peak demand of electrical power and an optimised operation scenario can store electrical power using a battery system still having sufficient storage capacity to store electrical energy if the economic price for electrical energy provided by a power grid is low.

According to an aspect the optimised operation scenario is determined in respect to economical cost operating the multitude of technical units corresponding to the optimised operation scenario.

According to an aspect the power consumption of each technical unit is assigned to flexible costs and/or to fixed costs to determine the optimised operation scenario in respect to economical cost.

According to an aspect the individual boundary conditions of the technical units comprise a maximum output power and/or input power of the technical unit and/or a currently disposable and/or receivable energy of the technical unit.

According to an aspect the overall boundary conditions of the technical units comprise operating hours of the multitude of technical units and/or economical costs of external electrical power supply and/or economical profit selling electrical power.

According to an aspect the electrical data of the technical unit is transmitted wireless in a timely manner to the analysing device for analysis.

An analysing device configured to perform the method according to claim 1 to 11 is provided. Using such a analysing device enables to use the method for evaluating an easy way at different sites.

According to another aspect a computer program, particularly an app, comprising instructions is disclosed, which, when the program is executed by a computer, cause the computer to carry out one of the described methods above. Such a computer program enables the use of the described method in different systems.

According to another aspect of the present invention, a computer-readable storage medium is disclosed on which the computer program is stored.

### Brief description of the drawings

The accompanying drawing, which is included to provide a further understanding of the invention and is incorporated in and constitute a part of this application, illustrate embodiments of the invention and together with the description serve to explain the principle of the invention. The drawing displays in:

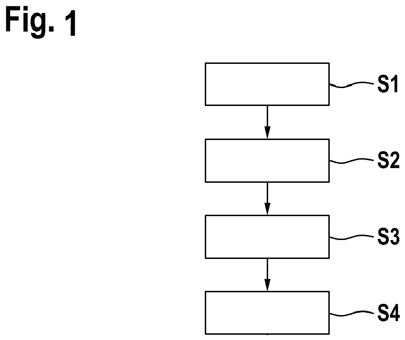

- Figure 1: a flow diagram of a method for evaluating an electrical power management of a multitude of technical units.

Figure 1 sketches schematically a flow diagram of a method for evaluating an electrical power management of a multitude of technical units. In a step S1 a multitude of non-invasive metering devices is electrically coupled with the respective multitude of technical units. In a further step S2 electrical data of the multitude of technical devices are measured with the respective non-invasive metering devices based on at least one operating scenario of the multitude of technical devices. In a further step S3 the electrical data of each of the multitude of technical units are transmitted to an analysing device based on a wireless technology. In a further step S4 an optimised operation scenario of the multitude of technical devices is determined in respect to electrical power management based on the measured electrical data of the multitude of technical units and based on individual boundary conditions of the technical units, for evaluating the electrical power management of the multitude of technical units.

## Claims

1. A method for evaluating an electrical power management of a multitude of technical units, comprising:
coupling a multitude of non-invasive metering devices electrically with the respective multitude of technical units (S1);
measuring electrical data of the multitude of technical devices with the respective non-invasive metering devices (S2) based on at least one operating scenario of the multitude of technical devices;
transmitting the electrical data of each of the multitude of technical units to an analysing device (S3) based on a wireless technology;
determining an optimised operation scenario of the multitude of technical devices in respect to electrical power management (S4) based on the measured electrical data of the multitude of technical units and based on individual boundary conditions of the technical units, for evaluating the electrical power management of the multitude of technical units.

2. The method according to claim 1, wherein evaluating the electrical power management comprises:
comparing of the optimised operation scenario to the at least one operating scenario.

3. The method according any of the preceding claims, comprising:
outputting the optimised operation scenario using the analysing device and/or an economical overall cost associated with the optimised operation scenario using the analysing device.

4. The method according to any of the preceding claims, wherein the technical unit comprises a flexible load and/or a shiftable load and/or a fixed load and the determination of the optimised operation scenario is based on shifting a power consumption in time of the shiftable load and/or based on adaptation of a power supply of the flexible load.

5. The method according to any of the preceding claims, wherein the technical unit comprises an electrical vehicle charging unit and/or a battery energy storing system and/or a combined heat and power unit and/or an electrical power generator and/or a solar powered generation unit and/or a capacitor bank and/or an arbitrary electrical load.

6. The method according any of the preceding claims, wherein the determination of the optimised operation scenario of the multitude of technical devices in respect to electrical power management is additionally based on an overall boundary condition for operating the multitude of technical units.

7. The method according any of the preceding claims, wherein the determination of the optimised operation scenario of the multitude of technical devices in respect to electrical power management is based on an estimated future demand of electrical power and/or estimated future provision of electrical power for at least one individual technical unit of the multitude of technical units.

8. The method according to any of the preceding claims, wherein the optimised operation scenario is determined in respect to economical cost operating the multitude of technical units corresponding to the optimised operation scenario.

9. The method according to claim 8, wherein the power consumption of each technical unit is assigned to flexible costs and/or to fixed costs to determine the optimised operation scenario.

10. The method according to any of the preceding claims, wherein the individual boundary conditions of the technical units comprise a maximum output and/or input power of the technical unit and/or a currently disposable and/or receivable energy of the technical unit.

11. The method according to any of the preceding claims, wherein the overall boundary conditions of the technical units comprise operating hours of the multitude of technical units and/or economical costs of external electrical power supply and/or economical profit selling electrical power.

12. An analysing device configured to perform the method according to claim 1 to 11.

13. A computer program, particularly an app, comprising instructions, which, when a computer executes the program, cause the computer to carry out the method according to claims 1 to 11.

14. A computer-readable storage medium comprising instructions which, when executed by a computer, cause the computer to carry out the method according to claims 1 to 11.
